# EUROPEAN PATENT SPECIFICATION

(11) **EP 1 616 084 B1**
(45) Date of publication and mention of the grant of the patent: **20.01.2010**
(21) Application number: 04725582.3
(22) Date of filing: 02.04.2004
(51) Int. Cl.: F01N 3/023

(54) **MOTOR VEHICLE WITH EXHAUST PURIFICATION**
KRAFTFAHRZEUG MIT ABGASREINIGUNG
VEHICULE AUTOMOBILE EQUIPE D'UN EPURATEUR DE GAZ

(30) Priority: 02.04.2003 SE 0300954
(43) Date of publication of application: 18.01.2006
(73) Proprietor: VOLVO LASTVAGNAR AB, 405 08 Göteborg (SE)
(72) Inventor: BERGLUND, Sixten, S-423 53 TORSLANDA (SE); ERIKSSON, Anders, S-413 20 GÖTEBORG (SE); STEEN, Marcus, S-424 33 ANGERED (SE); UDD, Sören, S-440 45 NÖDINGE (SE)
(74) Representative: Fröhling, Werner Otto
(86) International application number: PCT/SE2004/000514
(87) International publication number: WO 2004/088100

(56) References cited:
- EP-A2- 1 217 196
- EP-A2- 1 245 801
- FR-A1- 2 538 449
- FR-A1- 2 820 462

## Description

### Technical field

The present invention relates to a method of cleaning a filter during operation of a vehicle, including an internal combustion engine which, during operation, delivers exhaust to an exhaust system comprising said filter and a transmission drivable by the engine.

The present invention relates also to a motor vehicle comprising an internal combustion engine which, during operation, delivers exhaust to an exhaust system comprising control means, a filter, and a transmission drivable by said engine.

### Prior art

Various types of filters are used in motor vehicles today to purify exhaust to obtain lower emissions. They can be of the CRT (Continuously Regenerating Trap) type, i.e. a particle trap in which soot and sulphur compounds stick but which is also arranged to be able to be burned cleaned. During operation of vehicles with particle filters of this type, particles accumulate in the filter with time. Particles are packed into cavities and irregulatities, which plugs the filter. Plugging of the filter results in an increase in the exhaust counter pressure in the vehicle so that the vehicle engine must generate an unnecessary amount of energy to drive normally, thus increasing fuel consumption.

### Summary of the invention

One purpose of the invention is to provide a method of cleaning a filter in a motor vehicle in a cost effective manner.

This purpose is achieved with a method of the type described by way of introduction by selecting a gear ratio in the vehicle transmission so that a first temperature within a first temperature interval is obtained, the first interval being dependent of a degree of plugging of the filter with regard to a first particle type, and - then selecting a gear ratio so that a second temperature within a second temperature interval is obtained, said second temperature interval being dependent on another degree of plugging of the filter with regard to a second particule type, the first particle type and the second particle type being different from each other, and said selection achieving cleaning of the filter.

This temperature change has the advantage that it achieves a better regeneration of the filter. One advantage achieved with this solution is that the regeneration of the filter is achieved by utilizing synergy between the transmission and the engine which delivers exhaust to the exhaust housing during operation. More specifically, a regeneration of the filter is provided without the need for extra components particularly intended for such regeneration. This advantage is obtained by selecting, during the operation of the vehicle, the engine speed and the gear ratio so that for example the rotational speed of the output shaft of the transmission is substantially maintained while the engine rpm is changed so that the exhaust temperature increases. This temperature increase causes in turn the desired cleaning process. This solution will be very cost effective since the vehicle does not need to be provided with extra components. Furthermore, regeneration of the filter over time lowers the vehicle fuel consumption.

The method according to the invention makes it possible for the filter to be used for a longer period of time since it is not subjected to the same level of stresses as previously. The life of the filter can be increased since it is burnt clean (regenerated) at predetermined, planned intervals. Exhaust purification in the motor vehicle can function better in practice with the method.

One advantage is that the vehicle with a regenerated filter can be driven more fuel economically. In order to achieve advantages in the exhaust purification system, fuel consumption can need to be increased in the short term in order to lower the average fuel consumption.

Another advantage is that the above described filter does not need to be removed from the vehicle to be cleaned or replaced. The invention is thus both economical and time-saving as the vehicle does not need to be brought into the shop as often.

Furthermore, the vehicle will have improved driving performance since the average time value for the degree of the plugging of the filter will be lower than previously if there are frequent regenerations.

The invention provides adapted regeneration (soot combustion) of a CRT (Continuously Regenerating Trap) with regard to the soot which has stuck in the trap. By actively changing the gear ratio in the vehicle drive line while maintaining engine power, even at low rpm, an optimal temperature for an oxidation catalytic converter can be achieved. The optimal temperature can be in an interval around 300° C. With an optimal catalytic process, an optimal amount of nitrogen dioxide and oxygen is generated in the oxidation catalytic converter, which means that the soot in the filter can react chemically and be expelled from the exhaust system. The method involves coordinated control of the engine and the transmission.

By estimating or measuring both the amount and type of particles, a system according to the invention can decide when it is time to regenerate the trap. The system can, upon an indication or after calculations, temporarily deviate from the stored gear selection strategies and possibly optimum fuel consumption to regenerate the trap. The system is also designed to consider whether it is more advantageous to regenerate trap at a later time than when a first indication is received.

Furthermore, the invention achieves a regeneration of a CRT with regard to sulphur which has become stuck in the trap. The process is in principle the same as that described above but the regeneration in this case takes place most effectively at a temperature interval of about 600° C. The process can also be combined with a change in controllable parameters for fuel injection into the combustion chamber of the vehicle, which means that some fuel combusts only after entering the exhaust system, thus elevating the temperature in the same. This can also be achieved with a delayed fuel injection.

### Brief description of the drawings

Fig. 1 shows a schematic representation of a vehicle and a control system for the same.
Fig. 2 shows a computer bus with examples of detected or calculated data, which are used according to the invention.
Fig. 3a shows a schematical presentation of an exhaust system for a vehicle. Fig. 3b shows a diagram of the degree of conversion of NO_{X} compounds in an oxidation catalytic converter. Fig. 3c shows a diagram of how different constant engine powers vary with regard to temperature and engine rpm.
Fig. 4a shows a flow chart illustrating a method according to one embodiment of the invention. Fig. 4b shows a flow chart illustrating a more detailed method according to one embodiment of the invention. Fig. 4c shows a flow chart illustrating a method according to one embodiment of the invention. Fig. 4d shows a flow chart illustrating a method according to one embodiment of the invention. Fig. 4e shows an example of information indicating the degree of plugging of a filter.
Fig. 5 shows an apparatus used according to one embodiment of the invention.

### Detailed description of the drawings

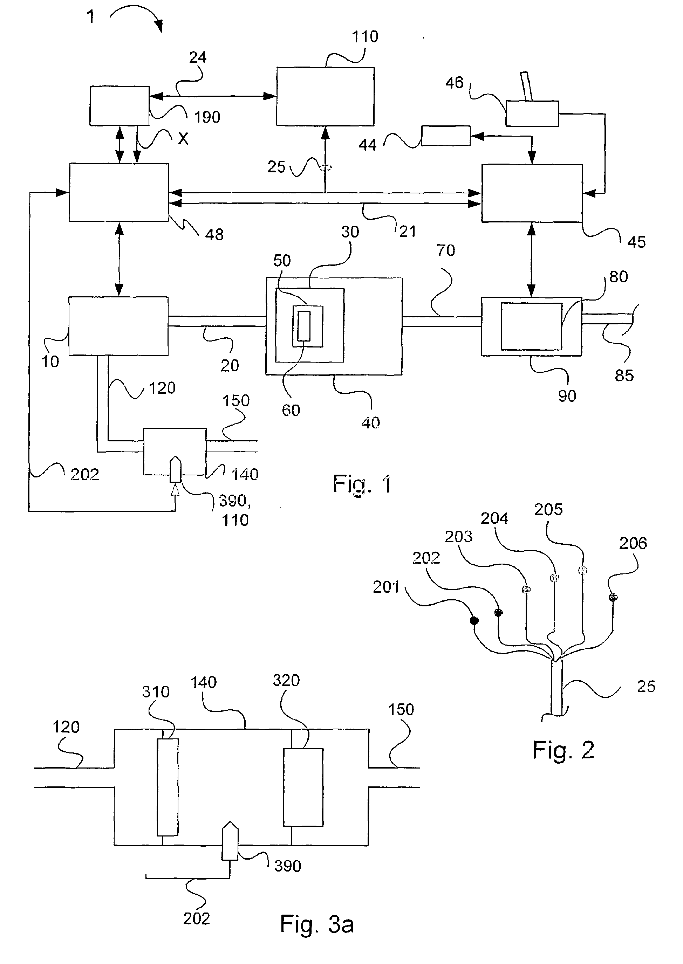

Fig. 1 shows a schematic representation of a vehicle 1 and a control system for the same according to one embodiment of the present invention, where 10 designates a six cylinder internal combustion engine, for example a diesel engine, the crank shaft 20 of which is coupled to a one disc dry disc clutch that is designated 30, which is enclosed in a clutch housing 40. Instead of a single disc clutch, a two disc clutch can be used. The crank shaft 20 is non-rotatably joined to the clutch body 50, while its disc 60 is non-rotatably joined to an input shaft 70 which is rotatably mounted in the housing 80 of a gear box generally designated 90. A main shaft and an intermediate shaft are rotatably mounted in the housing 80. An output shaft 85 extends from the gear box 90 to drive the vehicle wheels.

A first pipe 120 is disposed to conduct exhaust from the engine combustion chamber to an exhaust housing 140 disposed for exhaust cleaning. A second pipe 150 is arranged to conduct the cleaned exhaust and the remaining impurities from the housing 140 and out of the vehicle.

A first control unit 48 is also illustrated for controlling the engine 10 and a second control unit 45 for controlling the transmission. The first and the second control units are adapted for communication with each other via a data bus 21. Below it is stated that various processes and method steps take place in the first control unit 48, but it should be noted that the invention is not limited thereto. Rather, the second control unit 45 could be used just as well or in combination of the first and second control units.

Sensors and detectors have been given the collective label detector means 110. The detector means 110 are adapted for communication with both the first and second control units via a data bus 25. The detector means 110 can for example comprise a thermometer for exhaust 390 which can be placed in the housing 140.

An estimator 190 is arranged for communication with the detector means 110 and the first control unit 48. In this example, the estimator is arranged to communicate with the detector means 110 via a data bus 24. Below various processes and method steps are described as taking place in the estimator, but it should be noted that the invention is not limited thereto. Rather, the estimator can be physically incorporated either in the first or second control unit. Alternatively, the control units can be arranged to perform the functions of the estimator. The estimator is arranged to receive trip data, such as the amount of fuel consumed and instantaneous engine load, from the detector means 110, to process the trip data to compute vehicle exhaust emissions over time for example. The estimator is particularly disposed to generate information indicating plugging of the filter 320. According to one embodiment, the plugging of the filter 320 is expressed in the form of a value of a degree of plugging X in the filter 320. The estimator 190 is arranged to send a status signal containing the value of said degree of plugging X to the first control unit 48. The degree of plugging can be a qualitatively calculated, estimated value. The detector means 110 are thus arrranged to register, during operation, data which can be used to qualitatively compute the amount of particles which have become stuck in the filter 320. The degree of plugging X includes not only the amount of soot but also for example the amount of sulphurous compounds.

The vehicle 1 in Fig. 1 includes a throttle 44 and a manual gear selector 46, which is adapted for communication with the second control unit 45. The gear selector 46 can have a position for manual shifting and one for automatic gear shifting of the vehicle.

Fig. 2 shows a data bus 25 and examples of trip data registered or computed by the detector means 110. Examples of detected or calculated, instantaneous parameters are engine torque 201, exhaust temperature 202, engine power 203, vehicle acceleration 204, exhaust counter pressure 205 and fuel consumption 206. Other parameters can be injection timing, EGR valve position, NOP (Needle Opening Pressure). With the above mentioned parameters, the estimator 190 can compute the degree of plugging X of the filter 320.

Fig. 3a shows a schematic representation of an exhaust system according to one embodiment of the invention. The first pipe 120 is arranged to conduct exhaust particles from the vehicle's combustion chambers to the housing 140 in which the exhaust gases are completely or partially purified. Furthermore, the second pipe 150 is arranged to conduct the cleaned exhaust from the housing 140 and out of the vehicle 1 in Fig. 1. The housing 140 can consist of stainless steel. The housing 140 comprises a catalytic converter 310, which according to one aspect of the invention is an oxidation catalytic converter. The catalytic converter 310 can be provided with open channels, in which a chemical reaction takes place. Typically, in the catalytic converter 310, there are formed nitrogen dioxide (NO₂) and oxygen (O₂) of NO_{X} compounds, such as nitrogen trioxide (NO₃) under the effect of temperature.

Furthermore, the housing 140 includes the particle filter 320, which can be a diesel trap (DPF, Diesel Particle Filter), of CRT type. According to one embodiment of the filter 320, it lacks open channels. The exhaust gases are forced to pass through the filter on the way out of the exhaust system, in which trap particles can stick. The particles can consist of soot and sulphur compounds. Both the catalytic converter 310 and the trap 320 can be of ceramic materials and have a catalytic coating.

Some soot and sulphur compounds are collected during driving in the trap 320 and are packed there in uneven places and cavities. Soot and sulphur particles in the filter 320 can react chemically with oxygen under certain temperature conditions. Such a reaction can be initiated by steering the temperature in the housing 140 to a suitable value. This reaction can be called regeneration or burning clean. This regeneration can be an oxidation process. A large portion of the oxygen which can react with soot and sulphur particles is generated in the catalytic converter 310. The result of a so-called regeneration with regard to soot is carbon dioxide (CO₂), The second pipe 150 is arranged after the regeneration to conduct the resulting carbon dioxide from the housing 140 and out of the vehicle 1 in Fig. 1.

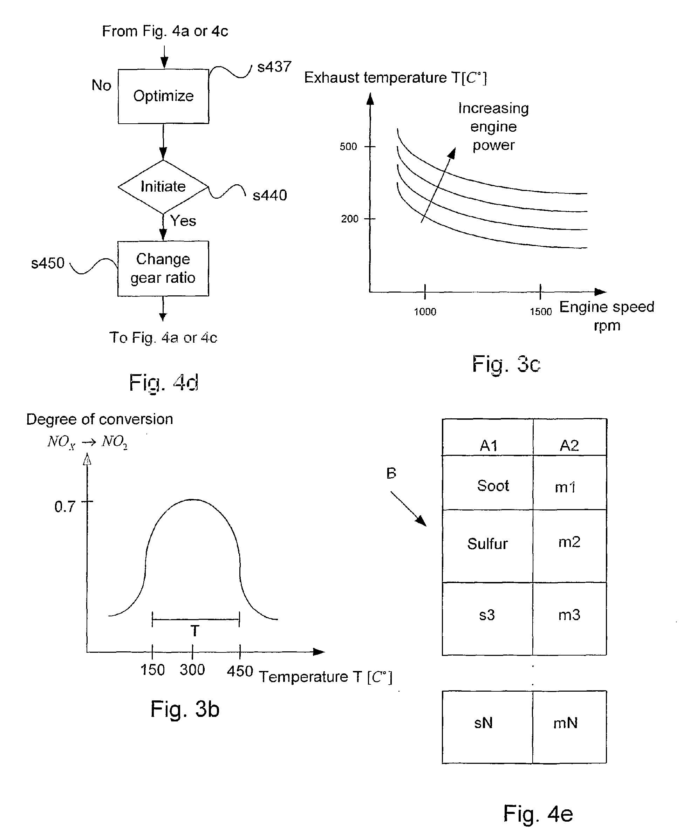

Fig. 3b illustrates how the degree of conversion for NO_{X} compounds to NO₂ in the catalytic converter 310 varies as a function of the exhaust temperature. It can be seen from the figure that the highest degree of conversion (in this example 0.7) is obtained at a temperature of circa 300° C. Furthermore, there can be seen that the degree of conversion is relatively high within a temperature interval T. This temperature interval can be between 150 and 450° C. The corresponding temperature interval for sulphur can be between 350 and 750° C.

Fig. 3c illustrates how different constant engine powers are dependent on the exhaust temperature T (°C) in the vehicle exhaust system and engine speed (rpm). Fig. 3c shows that the exhaust temperature increases if the engine speed is reduced for a constant engine power. Furthermore, the figure shows that a higher exhaust temperature can be obtained for higher constant engine power when the engine speed is reduced.

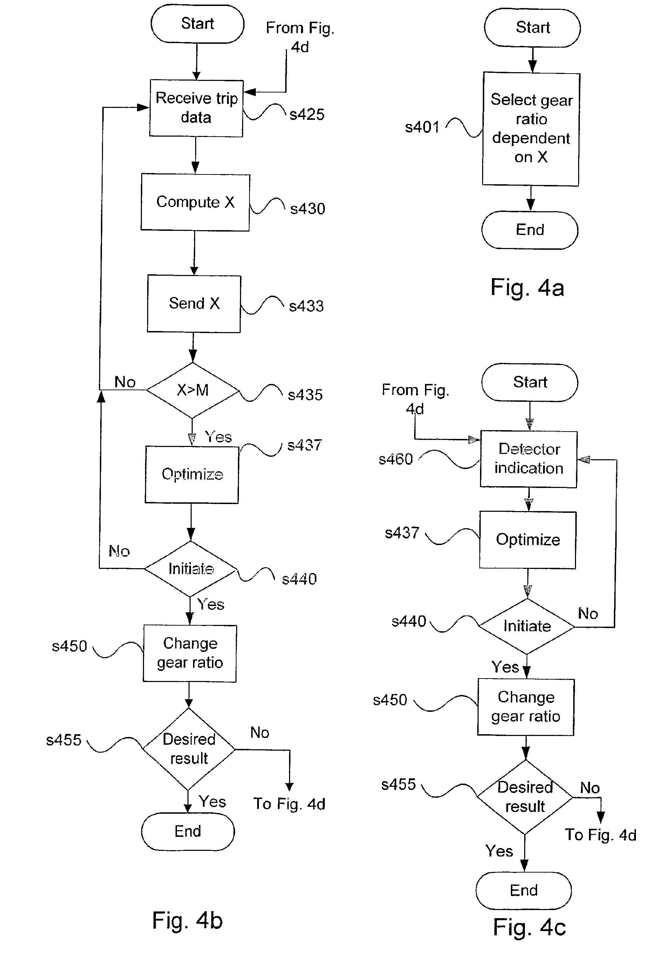

Fig. 4a shows a flow chart illustrating a method of achieving lower fuel consumption in a motor vehicle according to one embodiment of the invention.

The method involves the step s401 of selecting a gear ratio for the vehicle drive line, said selection being dependent on the degree of plugging (X) in the filter (320), this gear ratio being selected so that it causes a temperature change in the vehicle exhaust system to optimize the degree of conversion of NO_{X} compounds into nitrogen dioxide in the catalytic converter 310. An optimization of the oxygene gas generated in the same catalytic converter is also obtained thereby. An increased amount of oxygen and an elevated temperature in the exhaust system results in a burning clean (regeneration) of the filter 320 with regard to for example soot and/or sulphur compounds.

The combustion of soot means that soot is removed from the filter 320. This can occur by the soot reacting with oxygen to form carbon dioxide which can then be transported out of the exhaust system via the pipe 150.

The combustion of sulphur compounds removes these from the filter 320. This can occur by the sulphur compounds reacting with oxygen and the compounds formed thereby can then be transported out of the exhaust system via the pipe 150.

Fig. 4b shows a more detailed flow chart illustrating a method according to one embodiment of the invention. The method comprises the step s425 of receiving in the estimator 190 trip data such as for example 201-209 from the detector means 110. According to a model stored in the estimator 190, a value of degree of plugging X can be calculated on the basis of the trip data received. This is done in step s430. X can be a qualitative value of for example how great an amount of particles, what types of particles and how great an amount of particles of a certain type have become stuck in the trap 320. Fig. 4e shows an example of how information indicating the degree of plugging of the trap can be structured. The information can be stored in a table B with N rows and at least two columns. In the first column A1 there are different particle compounds stored. Each particle compound has a corresponding instantaneous value m1, m2, ..., mN arranged in column A2, m1, m2, ..., mN are the respective accumulated values representing how many particles of the corresponding type of particle are collected in the filter 320. For example, there is the amount m1 of soot particles in the filter at the point of time represented by the table B. Furthermore, there is the amount m2 of sulphur compound particles at the time represented by the table B, and so on.

The degree of plugging X and the threshold value M, described below, can contain some of the information represented in the table B.

When the degree of plugging X has been computed, it is sent in the method step s433 from the estimator 190 to the first control unit 48, for example, which receives the information.

In step s435 the degree of plugging X is compared in the first control unit 48 with a stored predetermined degree of plugging M. M is a threshold value which shows the degree of plugging which the filter 320 should have at most. If X is greater than M, this is an indication that the filter 320 should be regenerated, and the method step s437 will follow. If the comparison shows that X is less than M, there is a return to method step s425.

In method step s437 a qualitative optimization is performed as to which gear ratio is best to achieve a desired result as regards temperature change in the exhaust system. The optimization can be achieved by coordination with a shifting strategy stored in the second control unit 45. Optimization can be based on a number of different parameters, such as gear ratio of the drive chain and the period with changed gear ratio in the drive chain. Thus there is determined for which particle compound(s) there is to be regeneration, how long the regeneration (burning clean) is to take place and what result is desired.

In method step s440 it is determined whether the regeneration of the filter 320 is to be initiated immediately or whether regeneration at a later time is better. One example of a traffic situation where regeneration should preferably be postponed can be when the vehicle is on its way up a hill and an up-shifting to achieve a temperature rise in the exhaust system would be unsuitable, since the engine would be forced to operate at too low a rotational speed. If regeneration of the filter 320 is not to be initiated immediately, there is a return to s425.

After initiation the same is implemented in method step s450, and the gear ratio in the vehicle drive chain is possibly changed. The gear ratio can be changed in one or more steps. For example, the ratio can be changed from a third gear to a forth gear to achieve a temperature rise in the exhaust system to regenerate the filter 320 during a certain period of time. The time period can for example be two minutes.

In method step s455, the result o the regeneration is evaluated. This can be done with the aid of models stored in the estimator. Furthermore, a plugging can be detected if there is a high flow resistance after soot burning. If the result is the desired result or sufficiently good, the method can be terminated. Otherwise, the next method step is s437 in Fig. 4d where an optimization regards to other particles than soot also takes place.

According to another aspect of the invention, the amount of particles which have become stuck in the trap 320 are detected by a detector (not shown in the figure). In this case, a signal indicating that a certain threshold value has been exceeded, is sent from the detector to the first control unit 48. This is illustrated in method step s460 in Fig. 4c. Thereafter follow method steps s437, s440 and s450 as above. The method is thereafter terminated.

In Fig. 4d, the method steps s437, s440 and s450 takes place as above, but with a view to other particles than soot, for example sulphur compounds.

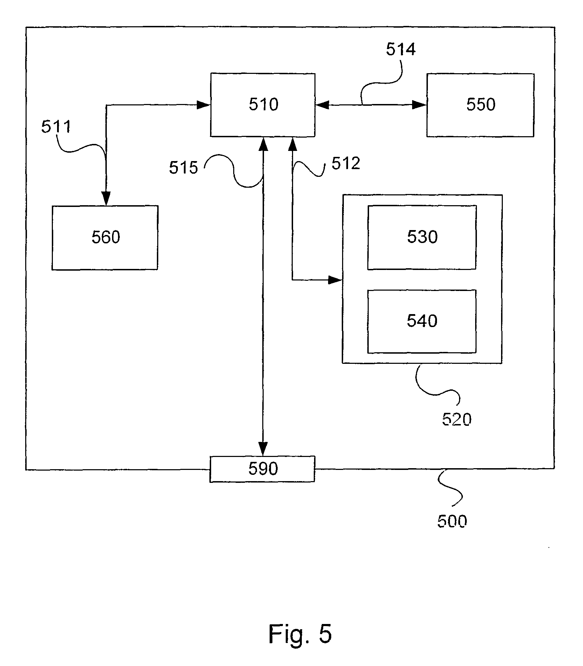

Fig. 5 shows an apparatus 500 according to one aspect of the invention, comprising a non-volatile memory 520, a processor 510 and a read and write memory 560. The memory 520 has a first memory portion 530 in which a computer program for controlling the apparatus 500 is stored. The computer program in the memory portion 530 for controlling the apparatus 500 can be an operating system.

The apparatus 500 can be enclosed for example in a control unit, such as the control unit 45 or 48. The data processing unit 510 can comprise a microcomputer.

The memory 520 also has a second memory portion 540 in which there is stored a program for exhaust purification in a motor vehicle. In an alternative embodiment the program for exhaust purification in a motor vehicle is stored in a separate non-volatile computer storage medium 550, such as a CD disc or a replaceable semiconductor memory. The program can be stored in executable form or in a compressed state.

Since in the following it is described that the data processing unit 510 performs a special function, it should be clear that the data processing unit 510 runs a special part of the program which is stored in the memory 540 or a special part of the program which is stored in the non-volatile recording medium 550.

The data processing unit 510 is adapted for communication with the memory 550 by means of a data bus 514. The data processing unit 510 is also adapted for communication with the memory 420 via a data bus 512. Furthermore, the data processing unit 510 is adapted for communication with the memory 560 by means of a data bus 511. The data processing unit 510 is also adapted for communication with a data port 590 via a data bus 515.

The methods described in Figs. 4a, 4b and 4c can be performed by the data processing unit 510 by the data processing unit 510 running the program which is stored in the memory 540 or the program which is stored in the non-volatile recording medium 550.

## Claims

1. Method of cleaning a filter during operation of a vehicle comprising an internal combustion engine (10) which, during operation, sends exhaust to an exhaust system (140) comprising said filter, and a transmission (10) drivable by said engine, **characterized by** the steps
- selecting a gear ratio in the vehicle transmission so that a first temperature within a first temperature interval is obtained, the first interval being dependent on a degree of plugging of the filter with regard to a first particle type, and
- then selecting a gear ratio so that a second temperature within a second temperature interval is obtained, said second temperature interval being dependent on another degree of plugging of the filter with regard to a second particle type, the first particle type and the second particle type being different from each other, and said selection achieving cleaning of the filter.

2. Method according to claim 1, **characterized in that**
- a catalytic converter in the exhaust system (140) is utilized to achieve an increased degree of conversion of possible NO_{X} compounds in the exhaust to nitrogen dioxide and oxygen depending on the temperature change; and
- that oxygen in the filter placed downstream of the catalytic converter in the exhaust system is used combust particles which have been caught in the filter so that they are removed from the filter, thereby reducing said degree of plugging.

3. Method according to claim 1 or 2, **characterized in that**
- the amount of particles generated by the internal combustion engine during its operation is computed depending of parameters which affect the operating conditions of the internal combustion engine; and that
- the degree of plugging of the filter is estimated depending on the calculated amount of particles and the filtering characteristic of the filter.

4. Method according to claim 1, 2 or 3, **characterized in that** the degree of plugging in the filter depending on the flow resistance in the filter is estimated.

5. Method according to one of claims 1-4, **characterized in that** the selection (s435) of gear ratio in the vehicle transmission is effective depending on a comparison of said information indicating the degree of plugging of the filter (320) and a predetermined boundary value information.

6. Method according to one of claims 1-5, **characterized in that** said selected gear ratio is maintained during a time interval depending on the degree of plugging of the vehicle at the beginning of the cleaning process and the desired degree of the plugging at the end of the cleaning process.

7. Motor vehicle comprising an internal combustion engine (10) which, during operation, sends exhaust to an exhaust system (140) comprising a filter (320), and control means (45; 48) and a transmission (90) drivable by the engine, **characterized in that** the control means (45; 48) are arranged to select a gear ratio in the transmission so that a first temperature within a first temperature interval is obtained, said first interval being dependent on a degree of plugging of the filter with regard to a first particle type; and that the control means (45; 48) are arranged to then select a gear ratio in the transmission so that a second temperature within a second temperature interval is obtained, said second temperature being dependent on another degree of plugging of the filter with regard to a second particle type, the first particle type and the second particle type being different from each other, and that selection achieving cleaning of the filter.

8. Motor vehicle according to claim 7, **characterized in that** the control means (45, 48) comprise a control unit (48) for controlling the engine (10) and a control unit (45) for controlling the transmission (90).

9. Motor vehicle according to claim 7 or 8, **characterized in that** a catalytic converter (310) in the exhaust system (140) is arranged to achieve an increased degree of conversion of any NO_{X} compounds in the exhaust to nitrogen dioxide and oxygen, depending on the temperature change and to utilize oxygen in the filter (320) placed downstream of the catalytic converter (310) in the exhaust system to combust particles caught in the filter so that these are removed from the filter, thereby reducing said degree of plugging.

10. Motor vehicle according to claim 7, 8 or 9, **characterized in that** an estimator (190) is arranged to calculate the amount of particles generated by the internal combustion engine during its operation, depending on parameters affecting on engine operating conditions, and to estimate the degree of plugging of the filter depending on the calculated amount of particles and the filtering characteristic of the filter.

11. Motor vehicle according to one of claims 7-10, **characterized in that** the sensors are arranged to estimate the degree of plugging of the filter depending on a flow resistance in the filter.

12. Motor vehicle according to one of claims 7-11, **characterized in that** the control means (45; 48) are arranged to select a gear ratio in the vehicle transmission depending on a comparison of said information indicating the degree of plugging of the filter (320) and the predetermined boundary value information.

13. Motor vehicle according to one of claims 7-12, **characterized in that** the control means (45; 48) are arranged to select a gear ratio which is maintained during a time interval depending on the degree of plugging of the filter at the beginning of the cleaning process and the desired degree of plugging at the end of the cleaning process.

14. Computer program comprising program code for carrying out the method steps of claim 1, when said computer program is executed in a computer.

15. Computer program product comprising program code stored on a medium readable by a computer for carrying out the method steps in claim 1, when said computer program is executed in the computer.

16. Computer program product directly storable in an internal memory in a computer, comprising computer programs for carrying out the method steps according to claim 1, when said computer program product is executed in the computer.

## Patentansprüche

1. Verfahren zur Reinigung eines Filters während des Betriebs eines Fahrzeuges mit einem Verbrennungsmotor (10), der während des Betriebs Abgas an ein Abgassystem (140) sendet, das den Filter umfasst, und einem Getriebe (90), das von dem Motor antreibbar ist,
**gekennzeichnet durch** die Schritte
- Wählen eines Übersetzungsverhältnisses in dem Fahrzeuggetriebe, so dass eine erste Temperatur innerhalb eines ersten Temperaturintervalls erhalten wird, wobei das erste Intervall von einem Grad der Verstopfung des Filters bezüglich eines ersten Partikeltyps abhängig ist, und
- dann Wählen eines Übersetzungsverhältnisses, so dass eine zweite Temperatur innerhalb eines zweiten Temperaturintervalls erhalten wird, wobei das zweite Temperaturintervall von einem anderen Grad der Verstopfung des Filters bezüglich eines zweiten Partikeltyps abhängig ist, wobei der erste Partikeltyp und der zweite Partikeltyp sich voneinander unterscheiden, und **durch** die Wahl die Reinigung des Filters erreicht wird.

2. Verfahren nach Anspruch 1, **dadurch gekennzeichnet, dass**
- ein katalytischer Konverter in dem Abgassystem (140) verwendet wird, um einen erhöhten Grad der Umwandlung von möglichen NO_{X}-Verbindungen in dem Abgas zu Stickstoffdioxid und Sauerstoff abhängig von der Temperaturänderung zu erreichen, und
- Sauerstoff in dem stromabwärts des katalytischen Konverters in dem Abgassystem angeordneten Filter zur Verbrennung von Partikeln verwendet wird, die in dem Filter gefangen wurden, so dass diese aus dem Filter entfernt werden, wodurch der Grad der Verstopfung verringert wird.

3. Verfahren nach Anspruch 1 oder 2, **dadurch gekennzeichnet, dass**
- die Menge an Partikeln, die durch den Verbrennungsmotor während seines Betriebs erzeugt werden, abhängig von Parametern berechnet wird, die die Betriebsbedingungen des Verbrennungsmotors beeinflussen, und
- der Grad der Verstopfung des Filters abhängig von der berechneten Menge von Partikeln und der Filtereigenschaft des Filters geschätzt wird.

4. Verfahren nach Anspruch 1, 2 oder 3, **dadurch gekennzeichnet, dass** der Grad der Verstopfung des Filters abhängig von dem Strömungswiderstand in dem Filter geschätzt wird.

5. Verfahren nach einem der Ansprüche 1 bis 4, **dadurch gekennzeichnet, dass** die Wahl (s435) des Übersetzungsverhältnisses in dem Fahrzeuggetriebe abhängig von einem Vergleich der Informationen, die den Grad der Verstopfung des Filters (320) anzeigen, und vorherbestimmten Grenzwertinformationen bewirkt wird.

6. Verfahren nach einem der Ansprüche 1 bis 5, **dadurch gekennzeichnet, dass** das gewählte Übersetzungsverhältnis während eines Zeitintervalls aufrecht erhalten wird, das von dem Grad der Verstopfung des Filters zu Beginn des Reinigungsprozesses und dem gewünschten Grad der Verstopfung am Ende des Reinigungsprozesses abhängt.

7. Kraftfahrzeug mit einem Verbrennungsmotor (10), der während des Betriebs Abgas an ein Abgassystem (140) mit einem Filter (320) sendet, und mit Steuereinrichtungen (45, 48) und einem Getriebe (90), das von dem Motor antreibbar ist,
**dadurch gekennzeichnet, dass** die Steuereinrichtung (45, 48) so konfiguriert ist, dass sie ein Übersetzungsverhältnis in dem Getriebe so wählt, dass eine erste Temperatur innerhalb eines ersten Temperaturintervalls erhalten wird, wobei das erste Intervall von einem Grad der Verstopfung des Filters bezüglich eines ersten Partikeltyps abhängig ist, und dass die Steuereinrichtung (45, 48) so konfiguriert ist, dass sie dann ein Übersetzungsverhältnis in dem Getriebe so wählt, dass eine zweite Temperatur innerhalb eines zweiten Temperaturintervalls erhalten wird, wobei die zweite Temperatur von einem anderen Grad der Verstopfung des Filters bezüglich eines zweiten Partikeltyps abhängig ist, wobei der erste Partikeltyp und der zweite Partikeltyp sich voneinander unterscheiden, und dass durch die Wahl eine Reinigung des Filters erreicht wird.

8. Kraftfahrzeug nach Anspruch 7, **dadurch gekennzeichnet, dass** die Steuereinrichtungen (45, 48) eine Steuereinheit (48) zur Steuerung des Motors (10) und eine Steuereinheit (45) zur Steuerung des Getriebes (90) umfassen.

9. Kraftfahrzeug nach Anspruch 7 oder 8, **dadurch gekennzeichnet, dass** ein katalytischer Konverter (310) in dem Abgassystem (140) angeordnet ist, um einen erhöhten Grad der Umwandlung jeglicher NO_{X}-Verbindungen in dem Abgas zu Stickstoffdioxid und Sauerstoff abhängig von der Temperaturänderung zu erreichen, und um Sauerstoff in dem Filter (320) zu verwenden, der in dem Abgassystem stromabwärts des katalytischen Konverters (310) angeordnet ist, um in dem Filter gefangene Partikel zu verbrennen, so dass diese aus dem Filter entfernt werden, wodurch der Grad der Verstopfung verringert wird.

10. Kraftfahrzeug nach Anspruch 7, 8 oder 9, **dadurch gekennzeichnet, dass** eine Schätzeinrichtung (190) angeordnet ist, um die Menge an durch den Verbrennungsmotor während seines Betriebs erzeugten Partikeln abhängig von Parametern zu berechnen, die die Motorbetriebsbedingungen beeinflussen, und um den Grad der Verstopfung des Filters abhängig von der berechneten Menge an Partikeln und der Filtereigenschaft des Filters zu schätzen.

11. Kraftfahrzeug nach einem der Ansprüche 7 bis 10, **dadurch gekennzeichnet, dass** die Sensoren so konfiguriert sind, dass sie den Grad der Verstopfung des Filters abhängig von einem Strömungswiderstand in dem Filter schätzen.

12. Kraftfahrzeug nach einem der Ansprüche 7 bis 11, **dadurch gekennzeichnet, dass** die Steuereinrichtungen (45, 48) so konfiguriert sind, dass sie ein Übersetzungsverhältnis in dem Kraftfahrzeuggetriebe abhängig von einem Vergleich der Informationen, die den Grad der Verstopfung des Filters (320) anzeigen, und vorherbestimmten Grenzwertinformationen wählen.

13. Kraftfahrzeug nach einem der Ansprüche 7 bis 12, **dadurch gekennzeichnet, dass** die Steuereinrichtungen (45, 48) so konfiguriert sind, dass sie ein Übersetzungsverhältnis wählen, das während eines Zeitintervalls aufrecht erhalten wird, das von dem Grad der Verstopfung des Filters zu Beginn des Reinigungsprozesses und dem gewünschten Grad der Verstopfung am Ende des Reinigungsprozesses abhängt.

14. Computerprogramm, das einen Programmcode zur Ausführung der Verfahrensschritte nach Anspruch 1 umfasst, wenn das Computerprogramm in einem Computer ausgeführt wird.

15. Computerprogrammerzeugnis mit einem auf einem durch einen Computer lesbaren Medium gespeicherten Programmcode zur Ausführung der Verfahrensschritte nach Anspruch 1, wenn das Computerprogramm in dem Computer ausgeführt wird.

16. Computerprogrammerzeugnis, das direkt in einem internen Speicher in einem Computer speicherbar ist, mit Computerprogrammen zur Ausführung der Verfahrensschritte nach Anspruch 1, wenn das Computerprogrammerzeugnis in dem Computer ausgeführt wird.

## Revendications

1. Procédé de nettoyage d'un filtre pendant un fonctionnement d'un véhicule comprenant un moteur à combustion interne (10) qui, en marche, envoie des gaz d'échappement à un système d'échappement (140) comprenant ledit filtre, et une transmission (10) pouvant être entraînée par ledit moteur,
**caractérisé par** les étapes consistant à :
- sélectionner un rapport de vitesse dans la transmission de véhicule de manière à ce qu'une première température située dans un premier intervalle de températures soit obtenue, le premier intervalle dépendant d'un degré de d'obturation du filtre par rapport à un premier type de particules, et
- sélectionner ensuite un rapport de vitesse de manière à ce qu'une seconde température située dans un second intervalle de températures soit obtenue, ledit second intervalle de températures dépendant d'une autre obturation du filtre par rapport à un second type de particules, le premier type de particule et le second type de particule étant différents l'un de l'autre, et ladite sélection permettant d'effectuer un nettoyage du filtre.

2. Procédé selon la revendication 1, **caractérisé en ce que**
- un convertisseur catalytique situé dans le système d'échappement (140) est utilisé pour obtenir un degré de conversion accru de composés de NO_{X} possibles dans les gaz d'échappement en dioxyde d'azote et oxygène, selon le changement de température ; et
- **en ce que** l'oxygène dans le filtre placé en aval du convertisseur catalytique dans le système d'échappement est utilisé pour brûler des particules qui ont été capturées dans le filtre, de sorte qu'elles sont supprimées du filtre, en réduisant ainsi ledit degré d'obturation.

3. Procédé selon la revendication 1 ou 2, **caractérisé en ce que**
- la quantité de particules générées par le moteur à combustion interne pendant son fonctionnement est calculée selon des paramètres qui affectent les conditions de fonctionnement du moteur à combustion interne ; et **en ce que**
- le degré d'obturation du filtre est estimé selon la quantité de particules calculée, et la caractéristique de filtrage du filtre.

4. Procédé selon la revendication 1, 2 ou 3, **caractérisé en ce que** le degré d'obturation dans le filtre est estimé selon la résistance à l'écoulement du filtre.

5. Procédé selon l'une quelconque des revendications 1 à 4, **caractérisé en ce que** la sélection (s435) du rapport de vitesse dans la transmission de véhicule est effective selon une comparaison de ladite information indiquant le degré d'obturation du filtre (320) et d'une information de valeur limite prédéterminée.

6. Procédé selon l'une quelconque des revendications 1 à 5, **caractérisé en ce que** ledit rapport de vitesse sélectionné est maintenu pendant un intervalle de temps selon le degré d'obturation du filtre au début du processus de nettoyage, et le degré d'obturation souhaité à la fin du processus de nettoyage.

7. Véhicule à moteur comprenant un moteur à combustion interne (10) qui, en fonctionnement, envoie des gaz d'échappement vers un système d'échappement (140) comprenant un filtre (320) et des moyens de commande (45 ; 48), et une transmission (90) pouvant être entraînée par le moteur,
**caractérisé en ce que** les moyens de commande (45 ; 48) sont agencés pour sélectionner un rapport de vitesse dans la transmission de manière à ce qu'une première température dans un premier intervalle de températures soit obtenue, ledit premier intervalle dépendant d'un degré d'obturation du filtre par rapport à un premier type de particules ; et **en ce que** les moyens de commande (45 ; 48) sont agencés pour sélectionner ensuite un rapport de vitesse dans la transmission, de telle sorte qu'une seconde température dans un second intervalle de températures soit obtenue, ladite seconde température dépendant d'un autre degré d'obturation du filtre par rapport à un second type de particules, le premier type de particules et le second type de particules étant différent l'un de l'autre, et **en ce que** la sélection permet d'accomplir un nettoyage du filtre.

8. Véhicule à moteur selon la revendication 7, **caractérisé en ce que** les moyens de commande (45 ; 48) comprennent une unité de commande (48) pour commander le moteur (10), et une unité de commande (45) pour commander la transmission (90).

9. Véhicule à moteur selon la revendication 7 ou 8, **caractérisé en ce qu'**un convertisseur catalytique (310) situé dans le système d'échappement (140) est agencé pour obtenir un degré de conversion accru de quelconques composés de NO_{X} dans les gaz d'échappement en dioxyde d'azote et oxygène, selon le changement de température, et pour utiliser l'oxygène dans le filtre (320) placé en aval du convertisseur catalytique (310) dans le système d'échappement pour brûler des particules piégées dans le filtre, de manière à ce qu'elles soient supprimées du filtre, en réduisant ainsi ledit degré d'obturation.

10. Véhicule selon la revendication 7, 8 ou 9, **caractérisé en ce qu'**un estimateur (190) est agencé pour calculer la quantité de particules générées par le moteur à combustion interne durant son fonctionnement, selon des paramètres affectant les conditions de fonctionnement du moteur, et pour estimer le degré d'obturation du filtre selon la quantité de particules calculée, et la caractéristique de filtrage du filtre.

11. Véhicule à moteur selon l'une quelconque des revendications 7 à 10, **caractérisé en ce que** les capteurs sont agencés pour estimer le degré d'obturation du filtre selon une résistance à l'écoulement dans le filtre.

12. Véhicule à moteur selon l'une quelconque des revendications 7 à 11, **caractérisé en ce que** les moyens de commande (45 ; 48) sont agencés pour sélectionner un rapport de vitesse dans la transmission de véhicule selon une comparaison de ladite information indiquant le degré d'obturation du filtre (320), et l'information de valeur limite prédéterminée.

13. Véhicule à moteur selon l'une quelconque des revendications 7 à 12, **caractérisé en ce que** les moyens de commande (45 ; 48) sont agencés pour sélectionner un rapport de vitesse qui est maintenu pendant un intervalle de temps selon le degré d'obturation du filtre au début du processus de nettoyage, et le degré d'obturation souhaité à la fin du processus de nettoyage.

14. Programme informatique comprenant un code de programme pour effectuer les étapes du procédé de la revendication 1, lorsque ledit programme informatique est exécuté dans un ordinateur.

15. Produit-programme informatique comprenant un code de programme mémorisé sur un support pouvant être lu par un ordinateur pour effectuer les étapes du procédé selon la revendication 1, lorsque ledit programme informatique est exécuté dans l'ordinateur.

16. Produit-programme informatique pouvant être mémorisé directement dans une mémoire interne située dans un ordinateur, comprenant des programmes informatiques pour effectuer les étapes de procédé selon la revendication 1, lorsque ledit produit-programme informatique est exécuté dans l'ordinateur.
